# EUROPEAN PATENT APPLICATION

(11) **EP 4 629 342 A1**
(43) Date of publication of application: **08.10.2025**
(21) Application number: 24909211.5
(22) Date of filing: 01.11.2024
(51) Int. Cl.: H01M 4/587, H01M 4/133, H01M 10/0525

(54) **SECONDARY BATTERY AND ELECTRIC DEVICE**

(30) Priority: 12.01.2024 CN 202410046330
(71) Applicant: Contemporary Amperex Technology Co., Limited, Ningde, Fujian 352100 (CN); Contemporary Amperex Technology (Hong Kong) Limited, Central, Hong Kong (HK)
(72) Inventor: BAI, Peiming, Fujian 352100 (CN); KANG, Meng, Fujian 352100 (CN)
(74) Representative: Jacob, Reuben Ellis
(86) International application number: PCT/CN2024/129504
(87) International publication number: WO 2025/148494

(57) **Abstract**

This application relates to a secondary battery and an electric apparatus. The secondary battery includes a negative electrode plate, where the negative electrode plate includes a negative electrode current collector and a negative electrode film layer formed on at least one surface of the negative electrode current collector. The negative electrode film layer includes a lower region and an upper region. The lower region includes a first negative electrode active material. The upper region includes a second negative electrode active material. A median Raman value ID/IG of the first negative electrode active material is denoted as R1₅₀, and a median Raman value ID/IG of the second negative electrode active material is denoted as R2₅₀, where R1₅₀ is less than R2₅₀. A graphitization degree of the first negative electrode active material is greater than a graphitization degree of the second negative electrode active material. This design is conducive to improving the fast charging performance and energy density of the secondary battery.

## Description

### CROSS-REFERENCE TO RELATED APPLICATIONS

This application claims priority to Chinese Patent Application No. 202410046330.8, filed on January 12, 2024 and entitled "SECONDARY BATTERY AND ELECTRIC APPARATUS", which is incorporated herein by reference in its entirety.

### TECHNICAL FIELD

This application relates to a secondary battery and an electric apparatus.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of lithium-ion secondary batteries, higher requirements are imposed on their energy density, fast charging performance, and the like.

### SUMMARY

This application is intended to provide a secondary battery and an electric apparatus.

Embodiments of this application are implemented as follows.

According to a first aspect, an embodiment of this application provides a secondary battery including a negative electrode plate, where the negative electrode plate includes a negative electrode current collector and a negative electrode film layer formed on at least one surface of the negative electrode current collector; the negative electrode film layer includes a lower region and an upper region; the lower region includes a first negative electrode active material; the upper region includes a second negative electrode active material; a median Raman value ID/IG of the first negative electrode active material is denoted as R1₅₀, and a median Raman value ID/IG of the second negative electrode active material is denoted as R2₅₀, where R1₅₀ is less than R2₅₀; and a graphitization degree of the first negative electrode active material is greater than a graphitization degree of the second negative electrode active material.

In the above technical solution, the median Raman value ID/IG of the first negative electrode active material of the negative electrode film layer close to the negative electrode current collector (that is, the lower region) is controlled to be low, the median Raman value ID/IG of the second negative electrode active material of the negative electrode film layer away from the negative electrode current collector (that is, the upper region) is controlled to be high, and the graphitization degree of the first negative electrode active material is controlled to be greater than the graphitization degree of the second negative electrode active material. This can improve the fast charging performance of a lithium-ion battery and increase the energy density of the lithium-ion battery.

In some optional embodiments, R1₅₀ is 0.05-0.15, and optionally, R1₅₀ is 0.05-0.1; and/or
R2₅₀ is 0.20-0.40, and optionally, R2₅₀ is 0.25-0.35.

In the above technical solution, the median Raman value ID/IG of the first negative electrode active material of the negative electrode film layer close to the negative electrode current collector is controlled to be low, and the median Raman value ID/IG of the second negative electrode active material of the negative electrode film layer away from the negative electrode current collector is controlled to be high. This allows for a synergistic effect and can improve the fast charging performance of the lithium-ion battery and increase the energy density of the lithium-ion battery.

In some optional embodiments, the graphitization degree of the first negative electrode active material is greater than or equal to 92%, optionally 93%-95%; and/or
the graphitization degree of the second negative electrode active material is greater than or equal to 91%, optionally 92%-94%.

In the above technical solution, the graphitization degree of the first negative electrode active material is greater than the graphitization degree of the second negative electrode active material or falls within the above range, which is conducive to increasing the energy density of the lithium-ion battery and improving the fast charging performance of the lithium-ion battery.

In some optional embodiments, a powder compacted density of the first negative electrode active material is greater than a powder compacted density of the second negative electrode active material.

In some optional embodiments, the powder compacted density of the first negative electrode active material tested under a pressure of 49000 N is greater than or equal to 1.95 g/cm³, optionally 1.96 g/cm³-1.99 g/cm³; and/or
the powder compacted density of the second negative electrode active material tested under a pressure of 49000 N is 1.81 g/cm³-1.87 g/cm³, optionally 1.82 g/cm³-1.86 g/cm³.

In the above technical solution, the powder compacted density of the first negative electrode active material is set to be greater than the powder compacted density of the second negative electrode active material or fall within the above range, which can improve the fast charging performance of the lithium-ion battery and increase the energy density of the lithium-ion battery.

In some optional embodiments, a powder OI of the first negative electrode active material is greater than a powder OI of the second negative electrode active material.

In some optional embodiments, the powder OI of the first negative electrode active material is 2.0-10.0, optionally 4.0-8.0; and/or
the powder OI value of the second negative electrode active material is 1.0-8.0, optionally 2.5-5.5.

In the above technical solution, the powder OI of the first negative electrode active material is greater than the powder OI of the second negative electrode active material or falls within the above range, which is conducive to increasing the energy density of the lithium-ion battery and improving the fast charging performance of the lithium-ion battery.

In some optional embodiments, a tap density of the first negative electrode active material is less than a tap density of the second negative electrode active material.

In some optional embodiments, the tap density of the first negative electrode active material is greater than or equal to 0.8 g/cm³, optionally 0.9 g/cm³-1.1 g/cm³; and/or
the tap density of the second negative electrode active material is 3.0 m²/g-4.3 m²/g, optionally 3.2 m²/g-4.0 m²/g.

In the above technical solution, the tap density of the first negative electrode active material is less than the tap density of the second negative electrode active material or falls within the above range, which can further effectively increase the energy density of the lithium-ion battery and is conducive to improving the fast charging performance of the lithium-ion battery.

In some optional embodiments, a particle size by volume Dᵥ1 of the first negative electrode active material is less than a particle size by volume Dᵥ1 of the second negative electrode active material.

In some optional embodiments, the particle size by volume Dᵥ1 of the first negative electrode active material is 1.0 µm-8.0 µm, optionally 3.0 µm-5.0 µm; and/or
the particle size by volume Dᵥ1 of the second negative electrode active material is 3.5 µm-10.0 µm, optionally 5.5 µm-8.0 µm.

In some optional embodiments, a particle size by volume Dᵥ50 of the first negative electrode active material is greater than a particle size by volume Dᵥ50 of the second negative electrode active material.

In some optional embodiments, the particle size by volume Dᵥ50 of the first negative electrode active material is 10 µm-20 µm, optionally 15 µm-16.5 µm; and
the particle size by volume Dᵥ50 of the second negative electrode active material is 10 µm-20 µm, optionally 13 µm-14.5 µm.

In some optional embodiments, a particle size distribution (Dᵥ90-Dᵥ10)/Dᵥ50 of the first negative electrode active material is greater than a particle size distribution (Dᵥ90-Dᵥ10)/Dᵥ50 of the second negative electrode active material.

In some optional embodiments, the particle size distribution (Dᵥ90-Dᵥ10)/Dᵥ50 of the first negative electrode active material is less than or equal to 2.0, optionally 1.2-1.8; and
the particle size distribution (Dᵥ90-Dᵥ10)/Dᵥ50 of the second negative electrode active material is less than or equal to 1.8, optionally 1.0-1.6.

In the above technical solution, the particle size distribution (Dᵥ90-Dᵥ10)/Dᵥ50 of the first negative electrode active material is set to be greater than the particle size distribution (Dᵥ90-Dᵥ10)/Dᵥ50 of the second negative electrode active material, so that a good normal particle size distribution can be formed. This is conducive to increasing the energy density of the lithium-ion battery and improving the fast charging performance of the lithium-ion battery.

In some optional embodiments, a specific surface area of the first negative electrode active material is less than a specific surface area of the second negative electrode active material.

In some optional embodiments, the specific surface area of the first negative electrode active material is 0.5 m²/g-3.0 m²/g, optionally 1.0 m²/g-2.5 m²/g; and/or
the specific surface area of the second negative electrode active material is 2.5 m²/g-4.4 m²/g, optionally 3.0 m²/g-4.0 m²/g.

In some optional embodiments, the first negative electrode active material satisfies at least one of the following characteristics:
(1) Dᵥ10 of the first negative electrode active material is 5 µm-9 µm, optionally 5.8 µm-7.8 µm;
(2) Dᵥ90 of the first negative electrode active material is less than or equal to 30 µm, optionally 20 µm-30 µm;
(3) Dᵥ99 of the first negative electrode active material is less than or equal to 40 µm, optionally 30 µm-40 µm; and
(4) a gram capacity of the first negative electrode active material is 355 mAh/g-365 mAh/g, optionally 357 mAh/g -363 mAh/g.

In some optional embodiments, the second negative electrode active material satisfies at least one of the following characteristics:
(1) Dᵥ10 of the second negative electrode active material is 6 µm-10.0 µm, optionally 7.5 µm-9.0 µm;
(2) Dᵥ90 of the second negative electrode active material is less than or equal to 30 µm, optionally 20 µm-30 µm;
(3) Dᵥ99 of the second negative electrode active material is less than or equal to 40 µm, optionally 30 µm-40 µm;
(4) a gram capacity of the second negative electrode active material is 352 mAh/g-362 mAh/g, optionally 354 mAh/g -360 mAh/g; and
(5) at least part of a surface of the second negative electrode active material has a carbon coating layer.

In some optional embodiments, the first negative electrode active material and/or the second negative electrode active material are each artificial graphite.

In some optional embodiments, a compacted density of the negative electrode film layer is greater than or equal to 1.25 g/cm³, optionally 1.28 g/cm³-1.65 g/cm³; and/or
a coating weight per unit area of the negative electrode film layer is greater than or equal to 0.075 mg/mm², optionally 0.08 mg/mm²-0.11 mg/mm².

According to a second aspect, an embodiment of this application provides an electric apparatus, where the electric apparatus includes the secondary battery according to the first aspect.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic diagram of an embodiment of a negative electrode plate according to this application.
FIG. 2 is a schematic diagram of another embodiment of a negative electrode plate according to this application.
FIG. 3 is a schematic diagram of another embodiment of a negative electrode plate according to this application.
FIG. 4 is a schematic diagram of a battery cell according to an embodiment of this application.
FIG. 5 is an exploded view of the battery cell according to the embodiment of this application in FIG. 4.
FIG. 6 is a schematic diagram of a battery module according to an embodiment of this application.
FIG. 7 is a schematic diagram of a battery pack according to an embodiment of this application.
FIG. 8 is an exploded view of the battery pack according to the embodiment of this application in FIG. 7.
FIG. 9 is a schematic diagram of an electric apparatus using a secondary battery as a power source according to an embodiment of this application.

### Description of reference signs:

1. battery pack; 2. upper box body; 3. lower box body; 4. battery module; 5. battery cell; 51. housing; 52. electrode assembly; 53. top cover assembly; 10. negative electrode plate; 101. negative electrode current collector; 102. negative electrode film layer; 102a. second surface; 102b. first surface; 1021. lower region; 1022. upper region; 1023. middle region; 200. first carbon-based material; 201. outer region; and 202. inner region.

### DESCRIPTION OF EMBODIMENTS

Embodiments that specifically disclose a secondary battery and an electric apparatus in this application are described in detail below with reference to the accompanying drawings as appropriate. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, all the steps in this application can be performed in the order described or in random order, preferably, in the order described. For example, the method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

A negative electrode affects the energy density and fast charging performance of a battery to some extent. Surprisingly, it has been found that in this application, the negative electrode can be controlled to obtain a secondary battery with both high energy density and fast charging characteristic.

In view of this, a first aspect of this application provides a secondary battery, which can improve the fast charging performance of the battery and increase the energy density of the battery.

The term "secondary battery" described herein refers to a battery cell, a battery module, or a battery pack.

Typically, a secondary battery cell includes a positive electrode plate, a negative electrode plate, an electrolyte, and a separator. During charging and discharging of the battery, active ions intercalate and deintercalate back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between the positive and negative electrodes and to allow ions to pass through.

### [Negative electrode plate]

The secondary battery includes a negative electrode plate. The negative electrode plate includes a negative electrode current collector and a negative electrode film layer disposed on at least one surface of the negative electrode current collector.

The negative electrode film layer has a first surface close to the negative electrode current collector and a second surface opposite the first surface. A lower region is formed by a region that is formed from the first surface to a specified thickness in a thickness direction of the negative electrode film layer. An upper region is formed by a region that is formed from the second surface to a specified thickness in the thickness direction of the negative electrode film layer.

A thickness of the negative electrode film layer is denoted as H. A thickness of the lower region may be any value within a range of 0.1H to 0.9H. For example, the thickness of the lower region may be 0.1H, 0.2H, 0.3H, 0.4H, 0.5H, 0.6H, 0.7H, 0.8H, or 0.9H.

A thickness of the upper region may also be any value within the range of 0.1H to 0.9H. For example, the thickness of the upper region may be 0.1H, 0.2H, 0.3H, 0.4H, 0.5H, 0.6H, 0.7H, 0.8H, or 0.9H.

Optionally, the negative electrode film layer further includes a middle region.

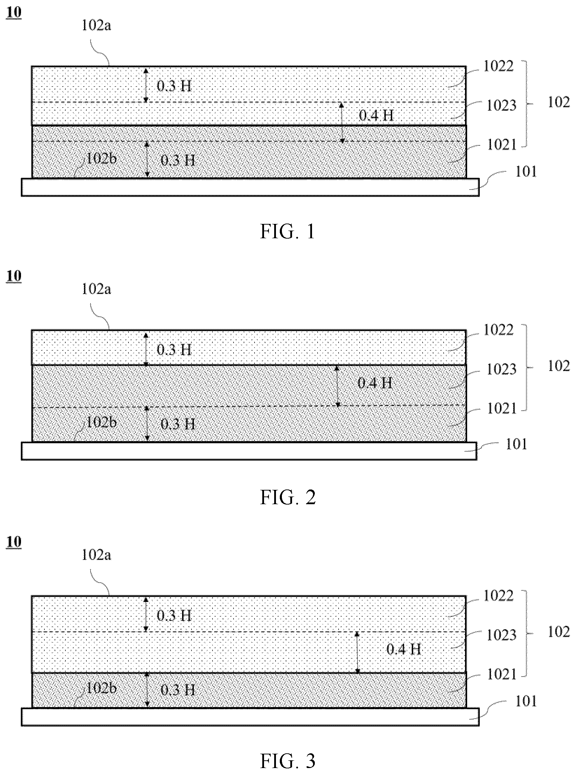

FIGs. 1 to 3 show schematic diagrams of several different specific embodiments of a negative electrode plate in this application. As shown in FIGs. 1 to 3, a negative electrode plate 10 includes a negative electrode current collector 101 and a negative electrode film layer 102 disposed on at least one surface of the negative electrode current collector 101. The negative electrode film layer 102 has a first surface 102b close to the negative electrode current collector 101 and a second surface 102a opposite the first surface 102b. A thickness of the negative electrode film layer 102 is denoted as H. The thickness H of the negative electrode film layer refers to a thickness of a negative electrode film layer located on a single side of the negative electrode current collector. A region from the second surface 102a of the negative electrode film layer to a specified thickness range (for example, 0.3H) is denoted as an upper region 1022 of the negative electrode film layer. A region from the first surface 102b of the negative electrode film layer to a specified thickness range (for example, 0.3H) is denoted as a lower region 1021 of the negative electrode film layer. The lower region 1021 includes a first negative electrode active material. The upper region 1022 includes a second negative electrode active material. A region occupying a thickness range of 0.4H between the upper region 1022 and the lower region 1021 is denoted as a middle region 1023. It is easily understood that referring to FIGs. 1 to 3, only the first negative electrode active material, only the second negative electrode active material, or both the first negative electrode active material and the second negative electrode active material may be present within a range of the middle region 1023.

It should be understood that in the embodiments shown in FIGs. 1 to 3, the first surface 102b is in contact with an upper surface of the negative electrode current collector 101, but the structure of the negative electrode plate in this application is not limited thereto. For example, an additional layer may be present between the negative electrode film layer 102 and the negative electrode current collector 101. In this case, the first surface 102b is not in direct contact with the negative electrode current collector 101.

Specifically, FIGs. 1 to 3 show that the first negative electrode active material and the second negative electrode active material are sequentially applied on the negative electrode current collector 101. FIG. 1 shows that the thickness of the lower region and the thickness of the upper region each occupy approximately half of the thickness of the negative electrode film layer 102. FIG. 2 shows that the thickness of the upper region occupies approximately 30% of the thickness of the negative electrode film layer 102, while the thickness of the lower region occupies approximately 70% of the thickness of the negative electrode film layer 102. FIG. 3 shows a configuration opposite to that of FIG. 2, where the thickness of the lower region occupies approximately 30% of the thickness of the negative electrode film layer 102, while the thickness of the upper region occupies approximately 70% of the thickness of the negative electrode film layer 102.

It should be understood that FIGs. 1 to 3 show ideal schematic diagrams. A ratio of the thickness of the lower region to the thickness of the upper region is not particularly limited in this application. For example, the ratio of the two may be any ratio within a range of 1:9 to 9:1. For example, the ratio of the thickness of the lower region to the thickness of the upper region may be 1:9, 2:8, 3:7, 4:6, 5:5, 6:4, 7:3, 8:2, 9: 1, or the like, or any ratio within a range defined by any two of these ratios.

It should also be understood that although clear boundaries between the regions are shown in FIGs. 1 to 3, but such clear interfaces may not exist in a product.

In this application, a median Raman value ID/IG of the first negative electrode active material is denoted as R1₅₀, and a median Raman value ID/IG of the second negative electrode active material is denoted as R2₅₀, where R1₅₀ is less than R2₅₀. In the above technical solution, the median Raman value ID/IG indicates an overall disorder degree of the material surface. A smaller median Raman value ID/IG indicates a lower overall disorder degree of the material surface. A smaller median Raman value ID/IG of the material is more conducive to the energy density.

In some embodiments of this application, the first negative electrode active material may use a highly anisotropic raw material or a material that has a high graphitization degree and is prepared using a high-temperature graphitization process, for example, a needle coke graphite matrix or a petroleum coke graphite matrix.

In some embodiments of this application, the second negative electrode active material may use a graphite material with a high disorder degree to obtain a second negative electrode active material with a large median Raman value ID/IG. Further optionally, the second negative electrode active material can be prepared using a process of applying a coating layer with a high disorder degree to graphite, for example, being prepared by applying a hard carbon coating layer to graphite.

Further, in the above technical solution, a smaller median Raman value ID/IG of the first negative electrode active material in the lower region is conducive to increasing the energy density of the battery.

Further, a larger median Raman value ID/IG indicates a higher overall disorder degree of the material surface. A higher disorder degree is more conducive to charge exchange on the surface of the negative electrode active material.

In the above technical solution, the larger median Raman value ID/IG of the second negative electrode active material in the upper region is conducive to charge exchange on the surface of the negative electrode active material, thereby improving kinetic performance.

Further, in some embodiments of this application, the median Raman value ID/IG of the second negative electrode active material is not only larger but also uniformly distributed. Thus, this is more conducive to lithium ion transfer, thereby facilitating the kinetic performance.

Further, in some embodiments of this application, a graphitization degree of the first negative electrode active material is greater than a graphitization degree of the second negative electrode active material.

In this application, the median Raman value ID/IG of the first negative electrode active material in the lower region is controlled to be low, the median Raman value ID/IG of the second negative electrode active material in the upper region is controlled to be high, and the graphitization degree of the first negative electrode active material is controlled to be greater than the graphitization degree of the second negative electrode active material. This can improve the fast charging performance of a lithium-ion battery and increase the energy density of the lithium-ion battery.

Further, in some embodiments of this application, R1₅₀ is 0.05-0.15.

Further optionally, for example, in some embodiments of this application, R1₅₀ is 0.05, 0.06, 0.07, 0.08, 0.09, 0.10, 0.11, 0.12, 0.13, 0.14, or 0.15, or falls within a range defined by any two of these values.

In the above technical solution, R1₅₀ is set to be 0.05-0.15 and can match the foregoing R2₅₀, which can improve the fast charging performance of the lithium-ion battery and increase the energy density of the lithium-ion battery.

Further optionally, in some embodiments of this application, R1₅₀ is 0.05-0.10.

For example, in some embodiments of this application, R1₅₀ is 0.05, 0.06, 0.07, 0.08, 0.09, or 0.10.

In the above technical solution, R1₅₀ is further limited within the range of 0.05 to 0.10, which is more conducive to improving the fast charging performance of the lithium-ion battery and increasing the energy density of the lithium-ion battery.

Further, in some embodiments of this application, R2₅₀ is 0.20-0.40.

For example, in some embodiments of this application, R2₅₀ is 0.20, 0.21, 0.22, 0.23, 0.24, 0.25, 0.28, 0.30, 0.35, 0.35, 0.38, 0.39, or 0.40, or falls within a range defined by any two of these values.

In the above technical solution, R2₅₀ is set to be 0.20-0.40 and can match the foregoing R1₅₀, which can improve the fast charging performance of the lithium-ion battery and increase the energy density of the lithium-ion battery.

Further optionally, in some embodiments of this application, R2₅₀ is 0.25-0.35.

For example, R2₅₀ is 0.25, 0.26, 0.28, 0.31, 0.32, or 0.35.

In the above technical solution, R2₅₀ is further limited within the range of 0.25 to 0.35, which is more conducive to improving the fast charging performance of the lithium-ion battery and increasing the energy density of the lithium-ion battery.

Further, in some embodiments of this application, the graphitization degree of the first negative electrode active material is greater than or equal to 92%; optionally 93%-95%.

In the above technical solution, the graphitization degree of the first negative electrode active material is set to be greater than or equal to 94%, which can further effectively increase the energy density of the lithium-ion battery and is conducive to improving the fast charging performance of the lithium-ion battery.

Further optionally, in some optional embodiments of this application, the graphitization degree of the first negative electrode active material is 92%, 93%, 94%, or 95%, or falls within a range defined by any two of these values.

Further, in some embodiments of this application, the graphitization degree of the second negative electrode active material is greater than or equal to 91%, optionally 92%-94%.

In the above technical solution, the graphitization degree of the second negative electrode active material is set to be greater than or equal to 91%, which can further effectively increase the energy density of the lithium-ion battery and is conducive to improving the fast charging performance of the lithium-ion battery.

Further optionally, in some optional embodiments of this application, the graphitization degree of the second negative electrode active material is 91%, 92%, 93%, or 94%, or falls within a range defined by any two of these values.

Further, in some embodiments of this application, a powder compacted density of the first negative electrode active material is greater than a powder compacted density of the second negative electrode active material.

The powder compacted density of the first negative electrode active material is greater than the powder compacted density of the second negative electrode active material. This indicates that a compacted density of the lower region of the negative electrode film layer is higher, and a compacted density of the upper region of the negative electrode film layer is lower, so that particles are densely packed in the lower region of the negative electrode film layer, which can fully utilize the characteristics of high pressure density and high capacity of an active substance, ensuring the energy density of the film layer. Abundant pores are present in the upper region of the negative electrode film layer due to the low compacted density of the upper region, so that sufficient paths are provided for lithium ion transfer within the electrode plate, ensuring the fast charging capability of the film layer.

In the above technical solution, the powder compacted density of the first negative electrode active material is set to be greater than the powder compacted density of the second negative electrode active material, which can improve the fast charging performance of the lithium-ion battery and increase the energy density of the lithium-ion battery.

Further, in some embodiments of this application, the powder compacted density of the first negative electrode active material tested under a pressure of 49000 N is greater than or equal to 1.95 g/cm³, optionally 1.96 g/cm³-1.99 g/cm³.

For example, in some embodiments of this application, the powder compacted density of the first negative electrode active material tested under a pressure of 49000 N is 1.96 g/cm³, 1.97 g/cm³, 1.98 g/cm³, or 1.99 g/cm³.

Further, in some embodiments of this application, the powder compacted density of the second negative electrode active material tested under a pressure of 49000 N is 1.81 g/cm³-1.87 g/cm³, optionally 1.82 g/cm³-1.86 g/cm³.

For example, in some embodiments of this application, the powder compacted density of the second negative electrode active material tested under a pressure of 49000 N is 1.81 g/cm³, 1.82 g/cm³, 1.83 g/cm³, 1.84 g/cm³, 1.85 g/cm³, or 1.86 g/cm³.

Further, in some embodiments of this application, a powder OI of the first negative electrode active material is greater than a powder OI of the second negative electrode active material.

Further, in some embodiments of this application, the OI of the first negative electrode active material is 4.0-8.0.

In some embodiments of this application, the powder OI of the second negative electrode active material is 1.0-8.0.

The OI in the above technical solution refers to a voltage of the first or second negative electrode active material during discharging. The OI value of the first or second negative electrode active material directly affects the energy density of the lithium-ion battery.

In the above technical solution, the OI of the first negative electrode active material is set to be 4.0-8.0, and the powder OI of the second negative electrode active material is set to be 1.0-8.0. This is conducive to increasing the energy density of the lithium-ion battery and improving the fast charging performance of the lithium-ion battery.

For example, in some embodiments of this application, the OI of the first negative electrode active material is 4.0, 4.5, 5.0, 5.5, 6.0, 6.5, 7.0, 7.5, or 8.0, or falls within a range defined by any two of these values.

For example, in some embodiments of this application, the OI of the second negative electrode active material is 1.0, 2.0, 3.0, 4.0, 4.5, 5.0, 5.5, 6.0, 6.5, 7.0, 7.5, or 8.0, or falls within a range defined by any two of these values.

Further, in some embodiments of this application, a tap density of the first negative electrode active material is less than a tap density of the second negative electrode active material.

Further, in some embodiments of this application, the tap density of the first negative electrode active material is greater than or equal to 0.8 g/cm³, optionally 0.9 g/cm³-1.1 g/cm³.

Further, in some embodiments of this application, a tap density of the second negative electrode active material is 3.0 m²/g-4.3 m²/g, optionally 3.2 m²/g-4.0 m²/g.

Further, in the above technical solution, the tap density of the first or second negative electrode active material falling within the above range can effectively increase the energy density of the lithium-ion battery and is conducive to improving the fast charging performance of the lithium-ion battery.

For example, in some embodiments of this application, the tap density of the first negative electrode active material is 0.9 g/cm³, 1 g/cm³, or 1.1 g/cm³. The tap density of the second negative electrode active material is 3.0 m²/g, 3.2 m²/g, 3.5 m²/g, 3.8 m²/g, or 4.0 g/cm³.

Further, in some embodiments of this application, a particle size by volume Dᵥ1 of the first negative electrode active material is less than a particle size by volume Dᵥ1 of the second negative electrode active material.

Further, in some embodiments of this application, the particle size by volume Dᵥ1 of the first negative electrode active material is 1.0 µm-8.0 µm, optionally 3.0 µm-5.0 µm.

Further, in some embodiments of this application, the particle size by volume Dᵥ1 of the second negative electrode active material is 3.5 µm-10.0 µm, optionally 5.5 µm-8.0 µm.

For example, in some embodiments of this application, the particle size by volume Dᵥ1 of the first negative electrode active material is 1.0 µm, 2.0 µm, 3.0 µm, 4.0 µm, 5.0 µm, or 8.0 µm. The particle size by volume Dᵥ1 of the second negative electrode active material is 3.5 µm, 3.8 µm, 4 µm, 4.5 µm, 6 µm, 8 µm, or 10.0 µm.

Further, in some embodiments of this application, a particle size by volume Dᵥ50 of the first negative electrode active material is greater than a particle size by volume Dᵥ50 of the second negative electrode active material.

Further, in some embodiments of this application, the particle size by volume Dᵥ50 of the first negative electrode active material is 10 µm-20 µm, optionally 15 µm-16.5 µm.

Further, in some embodiments of this application, the particle size by volume Dᵥ50 of the second negative electrode active material is 10 µm-20 µm, optionally 13 µm-14.5 µm.

Further, for example, in some embodiments of this application, Dᵥ50 of the first negative electrode active material is 13.0 µm, 13.5 µm, 14.0 µm, 14.5 µm, 15.0 µm, 15.5 µm, 16.0 µm, 16.5 µm, or 17.0 µm, or falls within a range defined by any two of these values.

Further, for example, in some embodiments of this application, Dᵥ50 of the second negative electrode active material is 13.0 µm, 13.2 µm, 13.4 µm, 13.5 µm, 14.0 µm, or 14.5 µm, or falls within a range defined by any two of these values.

Further, in some embodiments of this application, a particle size distribution (Dᵥ90-Dᵥ10)/Dᵥ50 of the first negative electrode active material is greater than a particle size distribution (Dᵥ90-Dᵥ10)/Dᵥ50 of the second negative electrode active material.

Further, in some embodiments of this application, the particle size distribution (Dᵥ90-Dᵥ10)/Dᵥ50 of the first negative electrode active material is less than or equal to 2.0, optionally 1.2-1.8.

Further, in some embodiments of this application, the particle size distribution (Dᵥ90-Dᵥ10)/Dᵥ50 of the second negative electrode active material is less than or equal to 1.8, optionally 1.0-1.6.

In the above technical solution, (Dᵥ90-Dᵥ10)/Dᵥ50 of the first and second negative electrode active materials falls within the above range, a better normal distribution of particle size can be formed, so that a good normal particle size distribution can be formed. This is conducive to increasing the energy density of the lithium-ion battery and improving the fast charging performance of the lithium-ion battery.

For example, in some embodiments of this application, (Dᵥ90-Dᵥ10)/Dᵥ50 of the first negative electrode active material is 1.2, 1.3, 1.4, 1.5, 1.6, 1.7, or 1.8.

(Dᵥ90-Dᵥ10)/Dᵥ50 of the second negative electrode active material is 1.0, 1.1, 1.2, 1.3, 1.4, 1.5, or 1.6, or falls within a range defined by any two of these values.

Further, in some embodiments of this application, a specific surface area of the first negative electrode active material is less than a specific surface area of the second negative electrode active material.

Further, in some embodiments of this application, the specific surface area of the first negative electrode active material is 0.5 m²/g-3.0 m²/g, optionally 1.0 m²/g-2.5 m²/g.

Further, in some embodiments of this application, the specific surface area of the second negative electrode active material is 2.5 m²/g-4.4 m²/g, optionally 3.0 m²/g-4.0 m²/g.

For example, in some embodiments of this application, the specific surface area of the first negative electrode active material is 0.5 m²/g, 1 m²/g, 1.5 m²/g, 2 m²/g, 2.5 m²/g, or 3.0 m²/g. The specific surface area of the second negative electrode active material is 2.5 m²/g, 2.8 m²/g, 3 m²/g, 3.5 m²/g, 4 m²/g, or 4.4 m²/g.

Further, in the above technical solution, the specific surface area of the first or second negative electrode active material is a specific surface area of the material measured using CO₂ as a carrier gas. Since CO₂ molecules are relatively small and can enter a microporous structure of the material, a CO₂ adsorption specific surface area can reflect information such as a quantity proportion of micropores in the material. The CO₂ adsorption specific surface area of the first negative electrode active material falling within the above range can effectively increase the energy density of the lithium-ion battery and is conducive to improving the fast charging performance of the lithium-ion battery.

Further, in some embodiments of this application, the first negative electrode active material satisfies at least one of the following characteristics:
(1) Dᵥ10 of the first negative electrode active material is 5 µm-9 µm, optionally 5.8 µm-7.8 µm;
(2) Dᵥ90 of the first negative electrode active material is less than or equal to 30 µm, optionally 20 µm-30 µm;
(3) Dᵥ99 of the first negative electrode active material is less than or equal to 40 µm, optionally 30 µm-40 µm; and
(4) a gram capacity of the first negative electrode active material is 355 mAh/g-365 mAh/g, optionally 357 mAh/g -363 mAh/g.

Further, in some embodiments of this application, the second negative electrode active material satisfies at least one of the following characteristics:
(1) Dᵥ10 of the second negative electrode active material is 6 µm-10.0 µm, optionally 7.5 µm-9.0 µm;
(2) Dᵥ90 of the second negative electrode active material is less than or equal to 30 µm, optionally 20 µm-30 µm;
(3) Dᵥ99 of the second negative electrode active material is less than or equal to 40 µm, optionally 30 µm-40 µm;
(4) a gram capacity of the second negative electrode active material is 352 mAh/g-362 mAh/g, optionally 354 mAh/g -360 mAh/g; and
(5) at least part of a surface of the second negative electrode active material has a carbon coating layer.

Further, in the above technical solution, the gram capacity of the first or second negative electrode active material falling within the above range can effectively ensure the high energy density and good fast charging performance of the battery.

Further, in the above technical solution, the first-cycle coulombic efficiency of the first or second negative electrode active material falling within the above range can effectively increase the energy density of the lithium-ion battery and is conducive to improving the fast charging performance of the lithium-ion battery.

In the above technical solution, Dᵥ10, Dᵥ50, Dᵥ90, Dᵥ99, and Dᵥ1 of the first or second negative electrode active material being set within the above range is conducive to increasing the energy density of the lithium-ion battery and improving the fast charging performance of the lithium-ion battery.

Further, in some embodiments of this application, the first negative electrode active material and/or the second negative electrode active material are each artificial graphite.

Further, in some embodiments of this application, a compacted density of the negative electrode film layer is greater than or equal to 1.25 g/cm³, optionally 1.28 g/cm³-1.65 g/cm³.

For example, in some embodiments of this application, the compacted density of the negative electrode film layer is 1.28 g/cm³, 1.3 g/cm³, 1.35 g/cm³, 1.4 g/cm³, 1.45 g/cm³, 1.5 g/cm³, 1.55 g/cm³, 1.6 g/cm³, or 1.65 g/cm³.

Further, in some embodiments of this application, a coating weight per unit area of the negative electrode film layer is greater than or equal to 0.075 mg/mm², optionally 0.08 mg/mm²-0.11 mg/mm².

For example, in some embodiments of this application, the coating weight per unit area of the negative electrode film layer is 0.08 mg/mm², 0.09 mg/mm², 0.1 mg/mm², or 0.11 mg/mm².

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes other additives such as a thickener (for example, sodium carboxymethyl cellulose (CMC-Na)).

If the above conductive agent, binder, and other additives are present, their types and amounts are not particularly limited in this application and can be selected and determined by persons of ordinary skill in the art based on actual needs.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode plate may be prepared in the following manner: The constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied on the negative electrode current collector, followed by processes such as drying and cold pressing to obtain the negative electrode plate.

The negative electrode current collector includes two opposite surfaces in its thickness direction, and the negative electrode film layer is disposed on either or both of the two opposite surfaces of the negative electrode current collector. It should be noted that all negative electrode film layer parameters provided in this application are parameters of a negative electrode film layer disposed on one side of the negative electrode current collector. When the negative electrode film layer is disposed on both sides of the negative electrode current collector, parameters of the negative electrode film layer on any one side satisfy this application, that is, being considered to fall within the protection scope of this application.

In this application, the negative electrode plate does not exclude other additional functional layers other than the negative electrode film layer. For example, in some embodiments, the negative electrode plate further includes a conductive primer layer (for example, consisting of a conductive agent and a binder) disposed on the surface of the negative electrode current collector and sandwiched between the negative electrode current collector and the negative electrode film layer. In some embodiments, the negative electrode plate further includes a protective layer covering the surface of the negative electrode film layer.

In this application, an I_{D}/I_{G} value of a material (for example, the first negative electrode active material or the second negative electrode active material) can be tested using a Raman spectrometer, where I_{D} represents a D peak intensity of the Raman spectrum of the material within a range of 1350±50 cm⁻¹, and I_{G} represents a G peak intensity of the Raman spectrum of the material within a range of 1580±50 cm⁻¹. Test conditions may be as follows: An excitation wavelength is 532 nm, an optical grating has 600 lines per millimeter, an objective lens is 50x, an integration time is 10s, an accumulation number is 3 times, surface scanning is performed to obtain D peak and G peak intensities of 100 points, I_{D}/I_{G} values of 100 points are calculated, the maximum and minimum 25 I_{D}/I_{G} values are removed, and an average value of the remaining 50 points is an I_{D}/I_{G} value of the material. A test instrument may be a Horiba LabRAM HR800 Raman spectrometer.

In this application, the powder compacted density of the negative electrode active material has the well-known meaning in the art and can be tested using methods known in the art. For example, in accordance with GB/T 24533-2009, an electronic pressure testing machine (for example, UTM7305) is used for the test as follows: A specified amount M of a powder sample under test is placed on a dedicated compaction mold (with a base area S); different pressures can be set (49000 N can be used in this application); the pressure is kept for 30s; the pressure is released; after waiting for 10s, the thickness H of the compacted powder under this pressure is read from the device; and then calculation is performed to obtain the compacted density under this pressure, where the compacted density of the negative electrode active material under this pressure is equal to M/(H*S).

In this application, the graphitization degree of the material (for example, the first negative electrode active material or the second negative electrode active material) has the well-known meaning in the art and can be tested using instruments and methods known in the art. For example, an X-ray diffractometer (for example, Bruker D8 Discover) can be used for the test. The test can be performed in accordance with JIS K 0131-1996 and JB/T 4220-2011 to obtain an average interlayer spacing d002 of the C(002) crystal plane in a crystal structure of the material, and then the graphitization degree is obtained through calculation according to the formula: g=(0.344-d002)/(0.344-0.3354)×100%. In the above formula, d002 represents the average interlayer spacing of the C(002) crystal plane in the crystal structure of the material, in nanometers (nm).

In this application, the OI of the material (for example, the first negative electrode active material or the second negative electrode active material) has the well-known meaning in the art and can be tested using instruments and methods known in the art. According to the general principles of X-ray diffraction analysis and lattice parameter determination methods for graphite, including JIS K 0131-1996 and JB/T4220-2011, an X-ray powder diffractometer (X'pert PRO) is used to obtain an X-ray diffraction spectrum, and the orientation index of the negative electrode material can be calculated according to the formula: OI=C004/C110, where C004 represents a peak area of the 004 characteristic diffraction peak, and C110 represents a peak area of the 110 characteristic diffraction peak.

In this application, the tap density of the material (for example, the first negative electrode active material or the second negative electrode active material) has the well-known meaning in the art and can be tested using known instruments and methods known in the art. For example, the tap density can be tested using a powder tap density tester in accordance with GB/T 5162-2006. A test instrument may be a Dandong Bettersize BT-301, with test parameters as follows: a vibration frequency is 250±15 times/min, an amplitude is 3±0.2 mm, vibration count reaches 5000 times, and a volume of a measuring cylinder is 25 mL.

In this application, the particle sizes by volume Dᵥ1, Dᵥ10, Dᵥ50, and Dᵥ90 of the material (for example, the first negative electrode active material or the second negative electrode active material) have the well-known meanings in the art, respectively represent the particle sizes corresponding to the cumulative volume distribution percentages of 1%, 10%, 50%, and 90% of the material, and can be tested using instruments and methods known in the art. For example, the particle sizes by volume can be tested using a laser particle size analyzer in accordance with GB/T 19077-2016. A test instrument may be a Mastersizer 3000 laser particle size analyzer from Malvern Instruments in UK.

In this application, the specific surface area of the material (for example, the first negative electrode active material or the second negative electrode active material) has the well-known meaning in the art and can be tested using instruments and methods known in the art. For example, the specific surface area can be tested using a nitrogen adsorption specific surface area analysis test method in accordance with GB/T 19587-2017, and calculated using a BET (Brunauer Emmett Teller) method. A test instrument may be a specific surface area and pore size analyzer of Tri-Star 3020 from Micromeritics in USA.

In this application, a transmission electron microscopy can be used for determining whether there is a coating layer on the surface of the material (for example, the first negative electrode active material or the second negative electrode active material).

In this application, the gram capacity of the material (for example, the first negative electrode active material or the second negative electrode active material) has the well-known meaning in the art and can be tested using methods known in the art. For example, a test method is as follows: Sample powder, conductive agent carbon black (Super P), and binder polyvinylidene fluoride (PVDF) are mixed well with solvent N-methylpyrrolidone (NMP) at a mass ratio of 91.6:1.8:6.6 to prepare a slurry. The prepared slurry is applied on the surface of a negative electrode current collector copper foil and dried in an oven for later use. Ethylene carbonate (EC), ethyl methyl carbonate (EMC), and diethyl carbonate (DEC) are mixed at a volume ratio of 1:1:1 to obtain an organic solvent, and then LiPF₆ is dissolved in the organic solvent to prepare an electrolyte with a concentration of 1 mol/L. Then, a lithium metal sheet as a counter electrode, a polyethylene (PE) film as the separator, and the above electrolyte are assembled into a CR2430 button battery in an argon-protected glove box. The resulting button battery is left standing for 12 h, discharged to 0.005 V at a constant current of 0.05C at 25°C, left standing for 10 minutes, then discharged to 0.005 V at a constant current of 50 µA, left standing for 10 minutes, and then discharged to 0.005 V at a constant current of 10 µA. A discharge capacity is recorded. A ratio of the discharge capacity to a mass of the sample is a gram capacity of a corresponding material (for example, the first negative electrode active material or the second negative electrode active material).

The thickness of the negative electrode film layer has the well-known meaning in the art and can be tested using methods known in the art, for example, being tested using a micrometer (for example, Mitutoyo 293-100 with an accuracy of 0.1 µm). The thickness range given in this application is a thickness range of a negative electrode film layer on one side of the negative electrode current collector. The thickness of the negative electrode film layer on either side of the negative electrode current collector falling within the range given in this application meets the requirements of this application.

It should be noted that the various parameter tests for the negative electrode active material or the negative electrode film layer can be sampled and tested from a prepared secondary battery in the following steps.

The secondary battery is discharged (for sake of safety, the battery is typically in a fully discharged state); the secondary battery is disassembled, then a negative electrode plate is taken out, and then the negative electrode plate is soaked in dimethyl carbonate for a given time (for example, 2 h-10 h); and then, the negative electrode plate is taken out and dried at a given temperature for a given time (for example, 60°C for 4 h or more). After dried, the negative electrode plate is taken out. At this time, the various parameters related to the negative electrode film layer, such as the compacted density, OI value, and thickness can be sampled and tested from the dried negative electrode plate.

The above dried negative electrode plate is baked at a given temperature for a given time (for example, 400°C for 2 h or more), one region is randomly selected from the baked negative electrode plate, and the negative electrode active material is sampled (a blade can be used to scrape off the powder for sampling); and the collected negative electrode active material is sieved (for example, the material is sieved using a 200-mesh sieve) to ultimately obtain a sample that can be used for testing the above various parameters of the negative electrode active material.

In this application, the foregoing first negative electrode active material and second negative electrode active material can be commercially obtained or prepared using the following method in this application.

In some embodiments, the first negative electrode active material can be prepared using the following method.
(1) A petroleum-based needle coke raw material is selected, crushed, shaped, and graded.
(2) Heat treatment: The process material after step (1) is mixed with a binder at a ratio of (8-12):1; then a granulation treatment is performed, where during the granulation treatment, the temperature is increased to a constant temperature of 600-700°C, and the time is 8-12 h; and then cooling is performed for 5-10 h to obtain an intermediate product 1.
(3) Graphitization: A graphitization treatment is performed on intermediate product 1 from step (2), with a graphitization temperature of 2800-3200°C.

In step (2), during the granulation treatment, the temperature is increased to a constant temperature of 600°C, 610°C, 620°C, 630°C, 640°C, 650°C, 660°C, 670°C, 680°C, 690°C, 700°C, or a range defined by any two of these values. In step (2), the mass ratio is selected to be 8:1, 9:1, 10:1, 11:1, or 12:1, or fall within a range defined by any two of these values.

In step (3), the graphitization temperature is 2800°C, 2900°C, 3000°C, 3100°C, or 3200°C, or falls within a range defined by any two of these values.

In some embodiments, the second negative electrode active material can be prepared using the following method.
(1) A petroleum-based needle coke raw material is selected, crushed, shaped, and graded.
(2) Heat treatment: The process material after step (1) is mixed with a binder at a mass ratio of (5-10):1; then a granulation treatment is performed, where during the granulation treatment, the temperature is increased to a constant temperature of 600-700°C, and the time is 8-12 h; and then cooling is performed for 5-10 h to obtain an intermediate product 1.
(3) Graphitization: A graphitization treatment is performed on intermediate product 1 from step (2), with a graphitization temperature of 3000-3400°C, to obtain an intermediate product 2.
(4) Fusion coating and carbonization: A coating treatment is performed on the intermediate product 2 from step (3), a coating agent such as an organic carbon source is used for solid-liquid fusion, where the amount of the coating agent added accounts for 1-10% of the total mass of the intermediate product 2; and then, a carbonization treatment is performed at a carbonization treatment temperature of 1000-1200°C. In step (2), during the granulation treatment, the temperature is increased to a constant temperature of 600°C, 610°C, 620°C, 630°C, 640°C, 650°C, 660°C, 670°C, 680°C, 690°C, 700°C, or a range defined by any two of these values. In step (2), the mass ratio is selected to be 5:1, 6:1, 7:1, 8:1, 9:1, or 10:1, or fall within a range defined by any two of these values.

In step (3), the graphitization temperature is 3000°C, 3100°C, 3200°C, 3300°C, or 3400°C, or falls within a range defined by any two of these values.

The organic carbon source in step (4) may include one or more of coal tar pitch, petroleum pitch, phenolic resin, coconut shell, and the like. The amount of the coating agent added in step (4) accounts for 1%, 2%, 3%, 4%, 5%, 6%, 7%, 8%, 9%, 10%, or a range defined by any two of these values of the total mass of the intermediate product 2. The carbonization treatment temperature in step (4) may be selected to be 1000°C, 1010°C, 1050°C, 1100°C, 1150°C, 1180°C, or 1200°C, or fall within a range defined by any two of these values.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, when the battery cell is a lithium-ion battery, a positive electrode active material may be a well-known positive electrode active material used for lithium-ion batteries in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi₁₃Co₁₃Mn₁₃O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, when the battery cell is a sodium-ion battery, a positive electrode active material may be a well-known positive electrode active material used for sodium-ion batteries in the art. For example, the positive electrode active material may include at least one of the following materials: a sodium transition metal oxide, a polyanionic compound, and a Prussian blue compound.

During charging and discharging of the battery, deintercalation and consumption of Li occur, and the molar content of Li in the battery varies at different states of discharge. In the enumeration of the positive electrode material in this application, the molar content of Li is an initial state of the material, that is, a state before feeding. The molar content of Li varies after the positive electrode material is applied to a battery system and undergoes charge and discharge cycles.

In the enumeration of the positive electrode material in this application, the molar content of O is only a theoretical state value, and lattice oxygen release causes the molar content of oxygen to vary, resulting in fluctuations in the actual molar content of O.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: The constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied on the positive electrode current collector, followed by processes such as drying and cold pressing to obtain the positive electrode plate.

### [Electrolyte]

An electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis(trifluoromethanesulfonyl)imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### [Separator]

In some embodiments, the battery cell further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and poly(vinylidene difluoride). The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the battery cell may include an outer package. The outer package may be used for packaging the foregoing electrode assembly and electrolyte.

In some embodiments, the outer package of the battery cell may be a hard shell, for example, a hard plastic shell, an aluminum shell, or a steel shell. The outer package of the battery cell may alternatively be a soft pack, for example, a soft pouch. A material of the soft pack may be plastic. As the plastic, polypropylene, polybutylene terephthalate, polybutylene succinate, and the like may be listed.

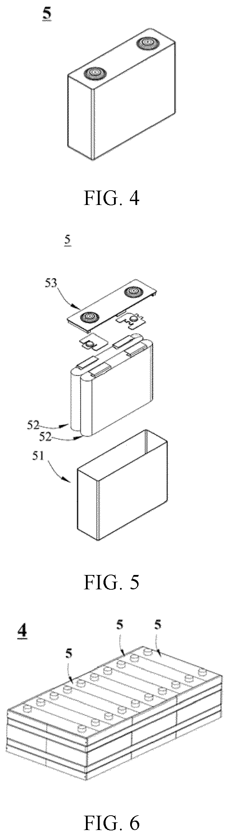

The battery cell is not limited to any particular shape in this application and may be cylindrical, rectangular, or of any other shapes. For example, FIG. 4 shows a rectangular battery cell 5 as an example.

In some embodiments, referring to FIG. 5, the outer package may include a housing 51 and a top cover assembly 53. The housing 51 may include a base plate and side plates connected to the base plate, and the base plate and the side plates enclose an accommodating cavity. The housing 51 has an opening communicating with the accommodating cavity, and the top cover assembly 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates into the electrode assembly 52. The battery cell 5 may include one or more electrode assemblies 52, and persons skilled in the art may make choices based on actual requirements.

In some embodiments, the battery cell may be assembled into a battery module, and the battery module may include one or more battery cells. The specific quantity may be chosen by persons skilled in the art according to use and capacity of the battery module.

FIG. 6 shows a battery module 4 as an example. Referring to FIG. 6, in the battery module 4, a plurality of battery cells 5 may be sequentially arranged along a length direction of the battery module 4. Certainly, the battery cells may alternatively be arranged in any other manners. Further, the plurality of battery cells 5 may be fastened through fasteners.

Optionally, the battery module 4 may further include a shell with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

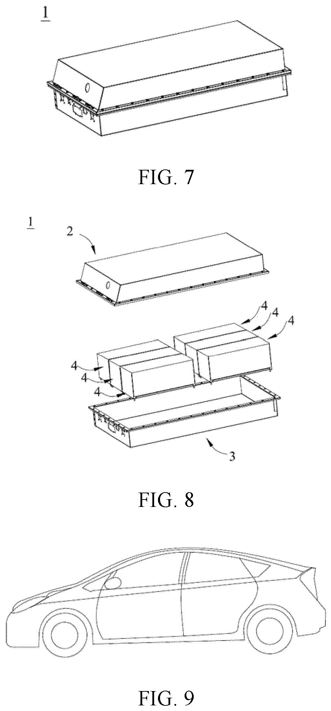

FIG. 7 and FIG. 8 show a battery pack 1 as an example. Referring to FIG. 7 and FIG. 8, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, a second aspect of this application provides an electric apparatus, where the electric apparatus includes the secondary battery provided in this application. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The battery cell, the battery module, or the battery pack may be selected for the electric apparatus based on requirements for using the electric apparatus.

FIG. 9 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. The electric apparatus is typically required to be light and thin and may use a battery cell as its power source.

### Examples

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

The materials used in the examples and comparative examples of this application can be commercially obtained or prepared using the following processes.

[Preparation of material 1-1] (first negative electrode active material):
(1) A petroleum-based needle coke raw material was selected, crushed, shaped, and graded.
(2) Heat treatment: The process material after step (1) was mixed with a binder at a mass ratio of 10:1; then a granulation treatment was performed, where during the granulation treatment, the temperature was increased to a constant temperature of 650°C, and the time was 10 h; and then cooling was performed for 8 h to obtain an intermediate product 1.
(3) Graphitization: A graphitization treatment was performed on intermediate product 1 from step (2), with a graphitization temperature of 3000°C.

The negative electrode active material 1-1 met the following conditions: A median Raman value ID/IG R1₅₀ was 0.08, a powder compacted density under 49000 N was 1.95 g/cm³, a graphitization degree was 94.5%, a powder OI was 4.8, a particle size by volume Dᵥ50 was 15 µm, a particle size by volume Dᵥ1 was 3.1 µm, and a specific surface area was 2.0 m²/g.

### [Preparation of material 1-2 and material 1-3]

The preparation methods differed from the preparation method of material 1-1 in the graphitization temperatures. For details, refer to Table 1.

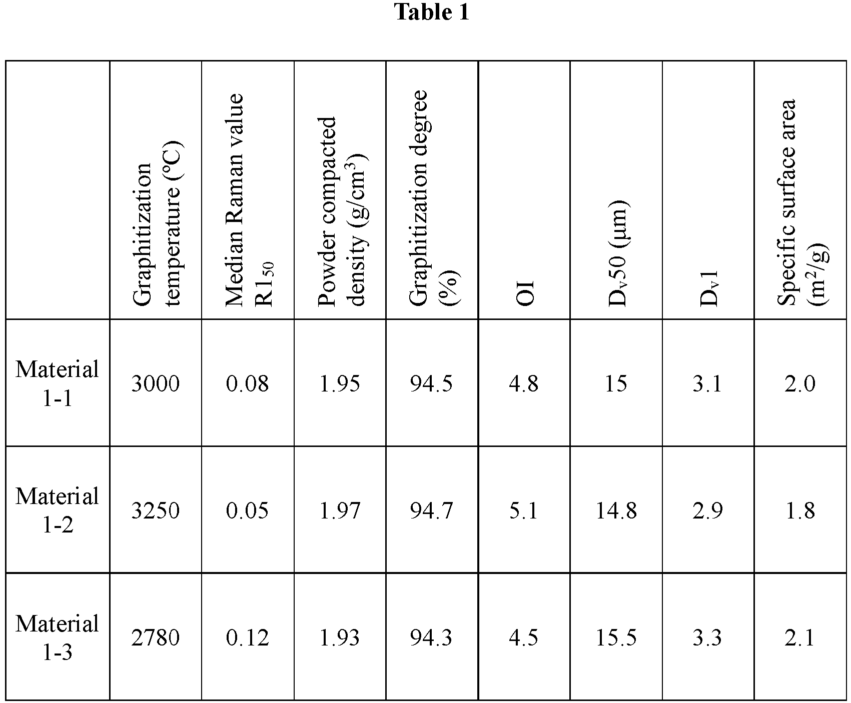

### [Preparation of material 2-1] (second negative electrode active material):

(1) A petroleum-based needle coke raw material was selected, crushed, shaped, and graded.
(2) Heat treatment: The process material after step (1) was mixed with a binder at a mass ratio of 8:1; then a granulation treatment was performed, where during the granulation treatment, the temperature was increased to a constant temperature of 650°C, and the time was 10 h; and then cooling was performed for 8 h to obtain an intermediate product 1.
(3) Graphitization: A graphitization treatment was performed on intermediate product 1 from step (2), with a graphitization temperature of 3200°C, to obtain an intermediate product 2.
(4) Fusion coating and carbonization: A coating treatment was performed on the intermediate product 2 from step (3), a coating agent such as a liquid phase phenolic resin coating agent was used for solid-liquid fusion, where the amount of the coating agent added accounted for 5% of the total mass of the intermediate product 2; and then, a carbonization treatment was performed at a carbonization treatment temperature of 1150°C, to obtain the negative electrode active material 1-1.

The negative electrode active material 1-1 met the following conditions: A median Raman value ID/IG R1₅₀ was 0.25, a powder compacted density under 49000 N was 1.81 g/cm³, a graphitization degree was 93.5%, a powder OI was 3.3, a particle size by volume Dᵥ50 was 14.5 µm, a particle size by volume Dᵥ1 was 6.8 µm, and a specific surface area was 3.4 m²/g.

### [Preparation of material 2-2, material 2-3, and material 2-4]:

The preparation methods were similar to the preparation method of material 2-1 except that the amounts of the coating agents added or the carbonization temperatures were different. For details, refer to Table 2.

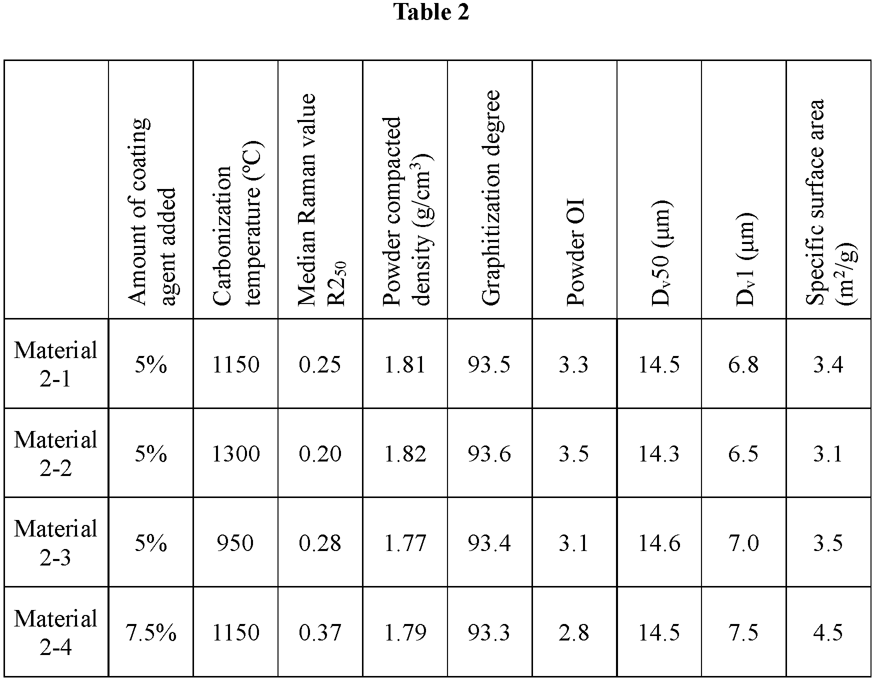

### Example 1

### <Preparation of secondary battery>:

### 1. Preparation of negative electrode plate

The first negative electrode active material (material 1-1), conductive agent carbon black (Super P), thickener sodium carboxymethyl cellulose, and binder styrene-butadiene rubber were mixed at a weight ratio of 96.4:1:1.2:1.4 in an appropriate amount of solvent deionized water, and then stirred and mixed well to form a first negative electrode slurry.

The second negative electrode active material (material 2-1), conductive agent carbon black (Super P), thickener sodium carboxymethyl cellulose, and binder styrene-butadiene rubber were mixed at a weight ratio of 96.4:1:1.2:1.4 in an appropriate amount of solvent deionized water, and then stirred and mixed well to form a second negative electrode slurry.

The first negative electrode slurry was applied on a surface of a negative electrode current collector copper foil to form a lower region of a negative electrode film layer, and the second negative electrode slurry was applied on a first negative electrode film layer to form an upper region of the negative electrode film layer, followed by processes such as drying and cold pressing to obtain a negative electrode plate. A mass ratio of the first negative electrode slurry to the second negative electrode slurry was 6:4, a compacted density of the negative electrode film layer was 1.6 g/cm³, and a coating weight on one surface of the negative electrode film layer was 8.6 mg/cm².

### 2. Preparation of positive electrode plate

Positive electrode active material NCM622 (LiNi_{0.6}Co_{0.2}Mn_{0.2}O₂), conductive agent (Super P), and binder polyvinylidene fluoride (PVDF) were mixed at a mass ratio of 96:2:2. Then, solvent N-methylpyrrolidone (NMP) was added. The resulting solution was stirred well to form a positive electrode slurry. Then, the positive electrode slurry was uniformly applied on a positive electrode current collector aluminum foil to form a positive electrode film layer, followed by drying and cold pressing to obtain a positive electrode plate.

### 3. Preparation of electrolyte

Ethylene carbonate (EC), ethyl methyl carbonate (EMC), and diethyl carbonate (DEC) were mixed at a volume ratio of 1:1:1. Then, a fully dried lithium salt LiPF₆ was dissolved in the mixed organic solvent at a concentration of 1 mol/L to prepare an electrolyte. Then, fluoroethylene carbonate (FEC) was added, where the content of FEC accounted for 1wt% of the total mass of the electrolyte.

### 4. Separator

A polypropylene film was used.

### 5. Preparation of secondary battery

The positive electrode plate, the separator, and the negative electrode plate were stacked sequentially so that the separator was located between the positive electrode plate and the negative electrode plate to provide separation. Then, the resulting stack was wound to obtain an electrode assembly. The electrode assembly was placed into an outer package. Then, the prepared electrolyte was injected into the dried electrode assembly, and processes such as vacuum packaging, standing, formation, and shaping were performed to obtain a secondary battery.

### Examples 2 and 3

The preparation methods of the batteries in Examples 2 and 3 were similar to that in Example 1, except that different materials 1-2 and 1-3 were selected for the first negative electrode active materials. For details, refer to Table 3.

### Examples 4 to 6

The preparation methods of the batteries in Examples 4 to 6 were similar to that in Example 1, except that different materials 2-2, 2-3, and 2-4 were selected for the second negative electrode active materials. For details, refer to Table 3.

### Comparative example 1

The preparation method in this comparative example for assembly of the secondary battery was similar to the preparation method in Example 1, except that the material 2-1 was selected as the first negative electrode active material, and the material 1-1 was selected as the second negative electrode active material. For details, refer to Table 3.

### Comparative example 2

A negative electrode active material (with the material 1-1 and material 2-1 mixed at a mass ratio of 6:4), conductive agent carbon black (Super P), thickener sodium carboxymethyl cellulose, and binder styrene-butadiene rubber were stirred and mixed well at a weight ratio of 96.4:1:1.2:1.4 in an appropriate amount of solvent deionized water to form a negative electrode slurry.

The negative electrode slurry was applied on a surface of a negative electrode current collector copper foil to form a negative electrode film layer, followed by processes such as drying and cold pressing to obtain a negative electrode plate. A compacted density of the negative electrode film layer was 1.6 g/cm³, and a coating weight on one surface of the negative electrode film layer was 8.6 mg/cm².

### Comparative example 3

The preparation method in this comparative example for assembly of the secondary battery was similar to the preparation method in Comparative example 2, except that the negative electrode active material included only the material 1-1.

### Comparative example 4

The preparation method in this comparative example for assembly of the secondary battery was similar to the preparation method in Comparative example 2, except that the negative electrode active material included only the material 2-1.

### [Performance test method]

Various performance parameters involved in all examples and comparative examples were tested using the following method.

### (1) Median Raman value R₅₀ of negative electrode active material in negative electrode film layer

The Raman spectrum of each carbon material could be obtained using a laser micro-Raman confocal spectrometer, with a laser wavelength of 532 nm. During testing, an appropriate amount of sample could be taken, omnidirectional surface scanning was performed on the surface of the sample, where a size of a scanning region was 100 µm×100 µm, a step size was 2 µm, and a total of 2500 points were scanned. Raman spectra at different positions and the corresponding Raman values ID/IG were obtained. A test instrument might be a high-precision Renishaw micro-Raman confocal spectrometer. Raman values ID/IG obtained from 2500 scanned points were sequentially arranged in an ascending order and respectively labeled as 1#, 2#, 3#, ..., and 2500#. The Raman value ID/IG corresponding to the scanned point at the 50% position of the order (corresponding to 1250#) was defined as R50 and also referred to as the median Raman value ID/IG. In this application, the median Raman value ID/IG of the first negative electrode active material was denoted as R1₅₀, and the median Raman value ID/IG of the second negative electrode active material was denoted as R2₅₀.

### (2) Gram capacity of material

The negative electrode active material, conductive agent Super P, and binder (PVDF) were mixed well at a mass ratio of 91.6:1.8:6.6 with solvent NMP (N-methylpyrrolidone) to prepare a slurry. The prepared slurry was applied on a copper foil current collector to prepare a negative electrode film layer, then the prepared negative electrode film layer was dried in an oven and then cold pressed for later use, where a compacted density of the negative electrode film layer was 1.3 g/cm³. A lithium metal sheet was used as a counter electrode. A polyethylene (PE) film was used as a separator. Ethylene carbonate (EC), ethyl methyl carbonate (EMC), and diethyl carbonate (DEC) were mixed at a volume ratio of 1:1:1. Then, LiPF₆ was uniformly dissolved in the above solution to obtain an electrolyte, where the concentration of LiPF₆ was 1 mol/L. Then, the above parts were assembled into a CR2430 button battery in an argon-protected glove box. The resulting button battery was left standing for 12 hours, then discharged to 0.005 V at a constant current of 0.05C, left standing for 10 minutes, discharged to 0.005 V at a constant current of 50 µA, left standing for 10 minutes, and then discharged to 0.005 V at a constant current of 10 µA. A sum of three discharge capacities was the gram capacity of the material.

### (3) Test of powder compacted density

The powder compacted density of the negative electrode active material had the well-known meaning in the art and could be tested using methods known in the art. For example, in accordance with GB/T 24533-2009, an electronic pressure testing machine (for example, UTM7305) was used for the test as follows: A specified amount M of a powder sample under test was placed on a dedicated compaction mold (with a base area S); different pressures could be set (49000 N could be used in this application); the pressure was kept for 30s; the pressure was released; after waiting for 10s, the thickness H of the compacted powder under this pressure was read from the device; and then calculation was performed to obtain the compacted density under this pressure, where the compacted density of the negative electrode active material under this pressure was equal to M/(H*S).

### (4) Thickness H of negative electrode film layer on one surface

The thickness H of the negative electrode film layer on one surface could be measured using a micrometer. The thickness of the negative electrode film layer described in this application referred to the thickness of the negative electrode film layer pressed through cold pressing and used for assembling the battery.

### (5) Orientation index OI of negative electrode active material

According to the general principles of X-ray diffraction analysis and lattice parameter determination methods for graphite, including JIS K 0131-1996 and JB/T4220-2011, an X-ray powder diffractometer (X'pert PRO) was used to obtain an X-ray diffraction spectrum, and the orientation index of the negative electrode material could be calculated according to the formula: OI=C004/C110, where C004 represented a peak area of the 004 characteristic diffraction peak, and C110 represented a peak area of the 110 characteristic diffraction peak.

### (6) Mass energy density of battery

At 25°C, the battery cell was charged to 4.4 V at a constant current of 0.33C, and then charged at a constant voltage until the current was 0.05C. After left standing for 5 min, the battery cell was discharged to 2.8 V at a constant current of 0.33C to obtain a discharge capacity D0.

Mass energy density=D0/mass of secondary battery (the mass energy density was measured in Wh/kg).

In the formula, D0 represented a discharge capacity actually measured of a cell.

### (7) Test of rate performance of battery

At 25°C, the secondary battery was charged to 4.4 V at a constant current of 0.33C, and then charged at a constant voltage until the current was 0.05C. After left standing for 5 min, the secondary battery was discharged to 2.8 V at a constant current of 0.33C, and an actual capacity of the secondary battery was recorded as C0.

Then, the secondary battery was sequentially at constant currents of 0.5C0, 1.3C0, 2.0C0, 2.8C0, 3.5C0, 4.5C0, and 6.0C0 to 4.4 V or 0 V negative electrode cutoff potential (the process ended when either of the two was reached first). After charged each time, the secondary battery was discharged to 2.8 V at 1C0. Negative electrode potentials corresponding to cases where the secondary battery was charged to 10%, 20%, 30%, ..., and 80% SOC (State of Charge) at different charge rates were recorded. A charge rate-negative electrode potential curve at different SOC states was plotted. Linear fitting was performed to obtain charge rates corresponding to 0 V negative electrode potentials at different SOC states. The charge rates were charge window at the SOC states, denoted as C10% SOC, C20% SOC, C30% SOC, C40% SOC, C50% SOC, C60% SOC, C70% SOC, and C80% SOC. Charge times T, measured in min, of the secondary battery from 10% SOC to 80% SOC (under the condition that no lithium precipitation was caused in the secondary battery) were obtained through calculation according to the following formula: (60/C20% SOC+60/C30% SOC+60/C40% SOC+60/C50% SOC+60/C60% SOC+60/C70% SOC+60/C80% SOC)×10%. When the charge time was shorter, the fast charging performance of the secondary battery was better.

Performance parameters of examples and comparative examples were shown in Table 3.

**Table 3**

| | First negative electrode active material | Second negative electrode active material | Fast charging performance of battery at 8% SOC-80% SOC (min) | Volumetric energy density of battery (Wh/kg) |
|---|---|---|---|---|
| Example 1 | Material 1-1 | Material 2-1 | 9.0 | 240.0 |
| Example 2 | Material 1-2 | Material 2-1 | 10.1 | 241.6 |
| Example 3 | Material 1-3 | Material 2-1 | 8.8 | 239.3 |
| Example 4 | Material 1-1 | Material 2-2 | 10.5 | 240.7 |
| Example 5 | Material 1-1 | Material 2-3 | 9.5 | 239.5 |
| Example 6 | Material 1-1 | Material 2-4 | 9.3 | 239.2 |
| Comparative example 1 | Material 2-1 | Material 1-1 | 13.0 | 240.0 |
| Comparative example 2 | Single-layer film: physical mixture of material 1-1 and material 2-1 | | 10.6 | 240.0 |
| Comparative example 3 | Single-layer film: including only material 1-1 | | 9.0 | 239.0 |
| Comparative example 4 | Single-layer film: including only material 2-1 | | 12.0 | 240.5 |

It can be seen from the data in the above table that:

Examples 1 to 6 meet the design of this application, and the batteries can achieve good fast charging performance and high energy density.

It can be seen from Comparative example 1 that R1₅₀ is greater than R2₅₀, which is not within the range of this application, and the fast charging performance is affected.

It can be seen from Comparative example 2 that the materials 1-1 and 2-1 are physically mixed in the negative electrode active materials, and the median Raman values of the negative electrode active materials in the lower region and the upper regions tend to be consistent, which does not conform to the design of this application, and the fast charging performance is also affected.

It can be seen from Comparative examples 3 and 4 that when the negative electrode active material includes only the material 1-1 or the material 2-1, the battery cannot achieve both good fast charging performance and high energy density.

The described embodiments are merely some but not all of the embodiments of this application. The detailed description of the embodiments of this application is not intended to limit the scope of this application but merely to represent selected embodiments of this application. All other embodiments obtained by persons of ordinary skill in the art based on the embodiments of this application without creative efforts shall fall within the protection scope of this application.

## Claims

1. A secondary battery, **characterized by** comprising a negative electrode plate, wherein the negative electrode plate comprises a negative electrode current collector and a negative electrode film layer formed on at least one surface of the negative electrode current collector; the negative electrode film layer comprises a lower region and an upper region; the lower region comprises a first negative electrode active material; the upper region comprises a second negative electrode active material; a median Raman value ID/IG of the first negative electrode active material is denoted as R1₅₀, and a median Raman value ID/IG of the second negative electrode active material is denoted as R2₅₀, wherein R1₅₀ is less than R2₅₀; and a graphitization degree of the first negative electrode active material is greater than a graphitization degree of the second negative electrode active material.

2. The secondary battery according to claim 1, **characterized in that**
R1₅₀ is 0.05-0.15; and/or
R2₅₀ is 0.20-0.40.

3. The secondary battery according to claim 1 or 2, **characterized in that**
R1₅₀ is 0.05-0.1; and/or
R2₅₀ is 0.25-0.35.

4. The secondary battery according to any one of claims 1 to 3, **characterized in that**
the graphitization degree of the first negative electrode active material is greater than or equal to 92%; and/or
the graphitization degree of the second negative electrode active material is greater than or equal to 91%.

5. The secondary battery according to any one of claims 1 to 4, **characterized in that**
the graphitization degree of the first negative electrode active material is 93%-95%; and/or
the graphitization degree of the second negative electrode active material is 92%-94%.

6. The secondary battery according to any one of claims 1 to 5, **characterized in that**
a powder compacted density of the first negative electrode active material is greater than a powder compacted density of the second negative electrode active material.

7. The secondary battery according to any one of claims 1 to 6, **characterized in that**
the powder compacted density of the first negative electrode active material tested under a pressure of 49000 N is greater than or equal to 1.95 g/cm³; and/or
the powder compacted density of the second negative electrode active material tested under a pressure of 49000 N is 1.81 g/cm³-1.87 g/cm³.

8. The secondary battery according to any one of claims 1 to 7, **characterized in that**
the powder compacted density of the first negative electrode active material tested under a pressure of 49000 N is 1.96 g/cm³-1.99 g/cm³; and/or
the powder compacted density of the second negative electrode active material tested under a pressure of 49000 N is 1.82 g/cm³-1.86 g/cm³.

9. The secondary battery according to any one of claims 1 to 8, **characterized in that**
a powder OI of the first negative electrode active material is greater than a powder OI of the second negative electrode active material.

10. The secondary battery according to claims 1 to 9, **characterized in that**
the powder OI of the first negative electrode active material is 2.0-10.0; and/or
the powder OI of the second negative electrode active material is 1.0-8.0.

11. The secondary battery according to any one of claims 1 to 10, **characterized in that**
the powder OI of the first negative electrode active material is 4.0-8.0; and/or
the powder OI of the second negative electrode active material is 2.5-5.5.

12. The secondary battery according to any one of claims 1 to 11, **characterized in that**
a tap density of the first negative electrode active material is less than a tap density of the second negative electrode active material.

13. The secondary battery according to any one of claims 1 to 12, **characterized in that**
the tap density of the first negative electrode active material is greater than or equal to 0.8 g/cm³; and/or
a specific surface area of the second negative electrode active material is 3.0 m²/g-4.3 m²/g.

14. The secondary battery according to any one of claims 1 to 13, **characterized in that**
the tap density of the first negative electrode active material is 0.85 g/cm³-1.15 g/cm³; and/or
the specific surface area of the second negative electrode active material is 3.2 m²/g-4.1 m²/g.

15. The secondary battery according to any one of claims 1 to 14, **characterized in that**
a particle size by volume Dᵥ1 of the first negative electrode active material is less than a particle size by volume Dᵥ1 of the second negative electrode active material.

16. The secondary battery according to any one of claims 1 to 15, **characterized in that**
the particle size by volume Dᵥ1 of the first negative electrode active material is 1.0 µm-8.0 µm; and/or
the particle size by volume Dᵥ1 of the second negative electrode active material is 3.5 µm-10.0 µm.

17. The secondary battery according to any one of claims 1 to 16, **characterized in that**
the particle size by volume Dᵥ1 of the first negative electrode active material is 3.0 µm-5.0 µm; and/or
the particle size by volume Dᵥ1 of the second negative electrode active material is 5.5 µm-8.0 µm.

18. The secondary battery according to any one of claims 1 to 17, **characterized in that**
a particle size by volume Dᵥ50 of the first negative electrode active material is greater than a particle size by volume Dᵥ50 of the second negative electrode active material.

19. The secondary battery according to any one of claims 1 to 18, **characterized in that**
the particle size by volume Dᵥ50 of the first negative electrode active material is 10 µm-20 µm; and/or
the particle size by volume Dᵥ50 of the second negative electrode active material is 10 µm-20 µm.

20. The secondary battery according to any one of claims 1 to 19, **characterized in that**
the particle size by volume Dᵥ50 of the first negative electrode active material is 14 µm-16.5 µm; and/or
the particle size by volume Dᵥ50 of the second negative electrode active material is 13 µm-15.5 µm.

21. The secondary battery according to any one of claims 1 to 20, **characterized in that**
a particle size distribution (Dᵥ90-Dᵥ10)/Dᵥ50 of the first negative electrode active material is greater than a particle size distribution (Dᵥ90-Dᵥ10)/Dᵥ50 of the second negative electrode active material.

22. The secondary battery according to any one of claims 1 to 21, **characterized in that**
the particle size distribution (Dᵥ90-Dᵥ10)/Dᵥ50 of the first negative electrode active material is less than or equal to 2.0; and/or
the particle size distribution (Dᵥ90-Dᵥ10)/Dᵥ50 of the second negative electrode active material is less than or equal to 1.8.

23. The secondary battery according to any one of claims 1 to 22, **characterized in that**
the particle size distribution (Dᵥ90-Dᵥ10)/Dᵥ50 of the first negative electrode active material is 1.2-1.8; and/or
the particle size distribution (Dᵥ90-Dᵥ10)/Dᵥ50 of the second negative electrode active material is 1.0-1.6.

24. The secondary battery according to any one of claims 1 to 23, **characterized in that**
a specific surface area of the first negative electrode active material is less than the specific surface area of the second negative electrode active material.

25. The secondary battery according to any one of claims 1 to 24, **characterized in that**
the specific surface area of the first negative electrode active material is 0.5 m²/g-3.0 m²/g; and/or
the specific surface area of the second negative electrode active material is 2.5 m²/g-4.4 m²/g.

26. The secondary battery according to any one of claims 1 to 25, **characterized in that**
the specific surface area of the first negative electrode active material is 1.0 m²/g-2.5 m²/g; and/or
the specific surface area of the second negative electrode active material is 3.0 m²/g-4.0 m²/g.

27. The secondary battery according to any one of claims 1 to 26, **characterized in that**
the first negative electrode active material satisfies at least one of the following characteristics:
(1) Dᵥ10 of the first negative electrode active material is 5 µm-9 µm;
(2) Dᵥ90 of the first negative electrode active material is less than or equal to 30 µm;
(3) Dᵥ99 of the first negative electrode active material is less than or equal to 40 µm; and
(4) a gram capacity of the first negative electrode active material is 355 mAh/g-365 mAh/g.

28. The secondary battery according to any one of claims 1 to 27, **characterized in that**
the first negative electrode active material satisfies at least one of the following characteristics:
(1) Dᵥ10 of the first negative electrode active material is 5.8 µm-7.8 µm;
(2) Dᵥ90 of the first negative electrode active material is 20 µm-30 µm;
(3) Dᵥ99 of the first negative electrode active material is 30 µm-40 µm; and
(4) the gram capacity of the first negative electrode active material is 357 mAh/g-363 mAh/g.

29. The secondary battery according to any one of claims 1 to 28, **characterized in that**
the second negative electrode active material satisfies at least one of the following characteristics:
(1) Dᵥ10 of the second negative electrode active material is 6 µm-10.0 µm;
(2) Dᵥ90 of the second negative electrode active material is less than or equal to 30 µm;
(3) Dᵥ99 of the second negative electrode active material is less than or equal to 40 µm;
(4) a gram capacity of the second negative electrode active material is 352 mAh/g-362 mAh/g; and
(5) at least part of a surface of the second negative electrode active material has a carbon coating layer.

30. The secondary battery according to any one of claims 1 to 29, **characterized in that**
the second negative electrode active material satisfies at least one of the following characteristics:
(1) Dᵥ10 of the second negative electrode active material is 7.5 µm-9.0 µm;
(2) Dᵥ90 of the second negative electrode active material is 20 µm-30 µm;
(3) Dᵥ99 of the second negative electrode active material is 30 µm-40 µm;
(4) the gram capacity of the second negative electrode active material is 354 mAh/g-360 mAh/g; and
(5) at least part of the surface of the second negative electrode active material has the carbon coating layer.

31. The secondary battery according to any one of claims 1 to 30, **characterized in that** the first negative electrode active material and/or the second negative electrode active material are each artificial graphite.

32. The secondary battery according to any one of claims 1 to 31, **characterized in that** a compacted density of the negative electrode film layer is greater than or equal to 1.25 g/cm³; and/or
a coating weight per unit area of the negative electrode film layer is greater than or equal to 0.075 mg/mm².

33. The secondary battery according to any one of claims 1 to 32, **characterized in that** the compacted density of the negative electrode film layer is 1.28 g/cm³-1.65 g/cm³; and/or
the coating weight per unit area of the negative electrode film layer is 0.08 mg/mm²-0.11 mg/mm².

34. An electric apparatus, **characterized in that** the electric apparatus comprises the secondary battery according to any one of claims 1 to 33.
